# EUROPÄISCHE PATENTSCHRIFT

(11) **EP 0 523 335 B1**
(45) Veröffentlichungstag und Bekanntmachung des Hinweises auf die Patenterteilung: **25.01.1995**
(21) Anmeldenummer: 92107787.1
(22) Anmeldetag: 08.05.1992
(51) Int. Cl.: B01J 2/26

(54) **Vorrichtung zum streifen- oder tropfenförmigen Ausbringen fliessfähiger Massen auf ein Transportband**
Process for applying as stripes or drops liquid masses on an conveyor belt
Procédé pour appliquer sous forme de bandes ou de gouttelettes des masses liquides sur un ruban sans fin

(30) Priorität: 09.06.1991 DE 4119021
(43) Veröffentlichungstag der Anmeldung: 20.01.1993
(73) Patentinhaber: Santrade Ltd., CH-6002 Luzern (CH)
(72) Erfinder: Froeschke, Reinhard, W-7056 Weinstadt-Beutelsbach (DE)
(74) Vertreter: Wilhelm & Dauster Patentanwälte European Patent Attorneys

(56) Entgegenhaltungen:
- DE-A- 3 209 747
- DE-A- 3 530 508

## Beschreibung

Die Erfindung bezieht sich auf eine Vorrichtung zum streifen- oder tropfenförmigen Ausbringen fließfähiger Massen auf ein unterhalb vorbeigeführtes Transportband nach dem Oberbegriff des Patentanspruchs 1.

Derartige Vorrichtungen sind aus der DE 28 53 054 C3 und der DE 29 41 802 C2 bekannt und dienen vorzugsweise der Granulat- oder Pastillenherstellung. Hierzu wird das Material, ggf. erwärmt, dem Inneren des zylindrischen Behälters unter Druck zugeführt, das Transportband in Lauf gesetzt und die äußere Trommel derart in Drehung versetzt, daß sich der dem Transportband zugewandte Umfangsbereich gleichsinnig mit dem Band bewegt. Sobald jeweils die Öffnungen der rotierenden Trommel mit denjenigen des inneren, zylindrischen Behälters zur Deckung kommen, wird ein Strang oder Tropfen der viskosen Masse durch die Öffnungen herausgedrückt und fällt auf das darunter liegende Transportband. Dort erhärten die einzelnen Stücke wieder, ggf. unterstützt durch eine Kühlung des Transportbandes, und können als Granulat oder Pastillen vom Band abgenommen werden.

Um den Trommelmantel von nicht abgetropftem Material freizuhalten und damit einhergehende Betriebsstörungen zu vermeiden, sind bei diesen Vorrichtungen Einweiser vorgesehen, die den Trommelmantel in einem vom Transportband abgewandten Umfangsbereich derart umgeben, daß zwischen Einweiser und Trommelmantel ein in Drehrichtung immer enger werdender Spalt gebildet ist. Der Einweiser erfüllt damit die Funktion, evtl. nicht abgetropftes, am Trommelaußenumfang anhaftendes Material wieder in die Öffnungen am Trommelmantel zurückzudrücken, um sie anschließend wieder auspressen zu können, wenn die jeweiligen Öffnungen wiederum im dem Transportband zugewandten Bereich mit den Öffnungen des inneren Behälters zur Deckung gelangen. Ein solcher Einweiser macht eine Abschabeinrichtung überflüssig und hat gegenüber dieser den Vorteil, daß das Material nicht erst in umständlicher Weise dem Prozeß erneut zugeführt werden muß oder gänzlich verloren geht.

Die Anbringung des Einweisers erfolgt bei den bekannten Vorrichtungen lösbar, jedoch starr mit Hilfe einer Befestigungsstange bzw. Befestigungswinkeln, die in der Regel oberhalb des Transportbandes und oberhalb der dort befindlichen Tropfen angeordnet sind. Die von dort aufsteigenden Dämpfe, die an den Befestigungsteilen kondensieren, können zu einer Beeinträchtigung der Halte- und Andrückfunktion führen.

Der Erfindung liegt die Aufgabe zugrunde, eine Vorrichtung der eingangs genannten Art zu schaffen, deren Teile bedienungs- und wartungsfreundlich angeordnet sind.

Diese Aufgabe wird durch eine Vorrichtung mit den Merkmalen des Patentanspruchs 1 gelöst. Die Wegschwenkbarkeit des Einweisers vom Trommelmantel erleichtert die Zugänglichkeit zum Einweiser selbst sowie zu dem vom Einweiser in Funktionsstellung abgedeckten Bereich des Trommelmantels. Dies erspart, beispielsweise für Wartungs- oder Reinigungsarbeiten, ein aufwendiges Lösen von Befestigungsschrauben sowie ein mühsames Einjustieren beim Wiederanbringen des Einweisers.

In Ausgestaltung der Erfindung ist nach Anspruch 2 der Einweiser mit einem Haltearm verbunden, der einseitig an der Schwenkhalterung angelenkt ist. Bevorzugt ist hierbei nach Anspruch 3 die Schwenkachse in einem Bereich seitlich des Transportbandes angeordnet und verläuft senkrecht zur Trommelachse.

Eine Weiterbildung der Erfindung nach Anspruch 4 ermöglicht, daß sich der Einweiser vom Bereich oberhalb des Transportbandes in einen Bereich seitlich des Bandes verschwenken läßt, was wiederum die Zugänglichkeit sehr erleichtert. Dabei ist es günstig, wenn gemäß Anspruch 5 der weggeschwenkte Einweiser samt Haltearm arretierbar ist, bevorzugt durch selbsttätiges Einrasten (Anspruch 6).

In weiterer Ausgestaltung der Erfindung ist die Schwenkhalterung selbst wiederum über einen Ring gemäß Anspruch 7 um die Trommelachse drehbeweglich angeordnet. Damit läßt sich auf einfache Weise die Lage des Einweisers in Umfangsrichtung der Trommel verstellen.

Die Weiterbildung der Erfindung nach Anspruch 8 hat zur Folge, daß bei nur einseitiger Trommellagerung mit zugehörigem Antrieb der Einweiser zu dieser Bedienungsseite hin verschwenkbar ist und daß der Haltearm und damit der Einweiser beim Zurückschwenken in die Betriebsstellung exakt und einfach gegenüber der Trommel festlegbar ist, indem der Sporn in die kegelförmige, stirnseitige Einbuchtung des Trommelbehälters hineingeschoben wird.

Eine geringe Querbeweglichkeit gegenüber dem Trommelmantel auch bei gegenüber dem Trommelbehälter fixiertem Haltearm läßt sich durch eine Vorrichtung mit den Merkmalen des Anspruchs 9 erreichen.

Die Weiterbildung nach Anspruch 10 hat den Vorteil, daß diese Bewegung des Einweisers relativ zum Haltearm durch eine seitlich am Transportband stehende Bedienperson über entsprechendes Betätigen der dieser Seite zugewandten Stange ausgelöst werden kann. Durch Vorsehen einer Druckfeder nach Anspruch 11 wird der Einweiser federelastisch gegen den Trommelmantel angedrückt, und zwar auch noch dann, wenn sich die den Trommelmantel berührende Frontseite des Einweisers durch etwaigen Verschleiß verkürzt hat. Zur Bewegungsbegrenzung kann der Anschlag nach Anspruch 12 vorgesehen sein, der die Bewegung des Einweisers vom Haltearm weg bei dessen Wegschwenken begrenzt. Bleibt die Stange auch beim Wiederheranschwenken des Einweisers an die Trommel in der durch diesen Anschlag definierten Stellung, so zeigt dies an, daß der am Trommelumfang anliegende Frontabschnitt des Einweisers verschlissen ist und ausgetauscht werden muß.

Eine vorteilhafte Bedienbarkeit ergibt sich auch aus einer Weiterbildung nach Anspruch 13. Der Haltearm kann mit dem Schwenkgriff beispielsweise von einer seitlich am Transportband stehenden Bedienperson zur Seite geschwenkt werden, wenn sich der Haltearm in Betriebsstellung quer über dem Transportband befindet. Die Merkmale des Anspruches 14 verhindern, daß kondensierende Dämpfe die Funktion der Andrückeinrichtungen des Haltearmes beeinträchtigen können.

Eine bevorzugte Ausführungsform der Erfindung ist zeichnerisch dargestellt und wird nachfolgend beschrieben. Es zeigen:
- Fig. 1: eine Granulier- bzw. Pastilliervorrichtung mit an einem schwenkbeweglichen Haltearm angeordnetem, einer quer zu einem Transportband angeordneten Trommel zugeordneten Einweiser in einer Draufsicht und
- Fig. 2: eine Seitenansicht längs des Schnittes II-II der Fig. 1 und
- Fig. 2a: eine perspektivische Darstellung der an der Trommel anliegenden Seite des Einweisers in vergrößertem Maßstab.

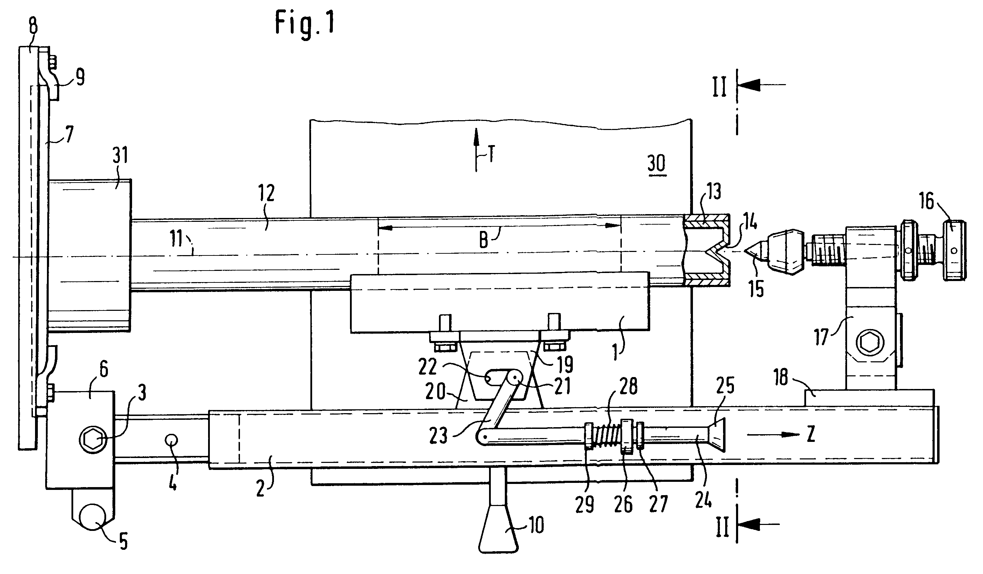

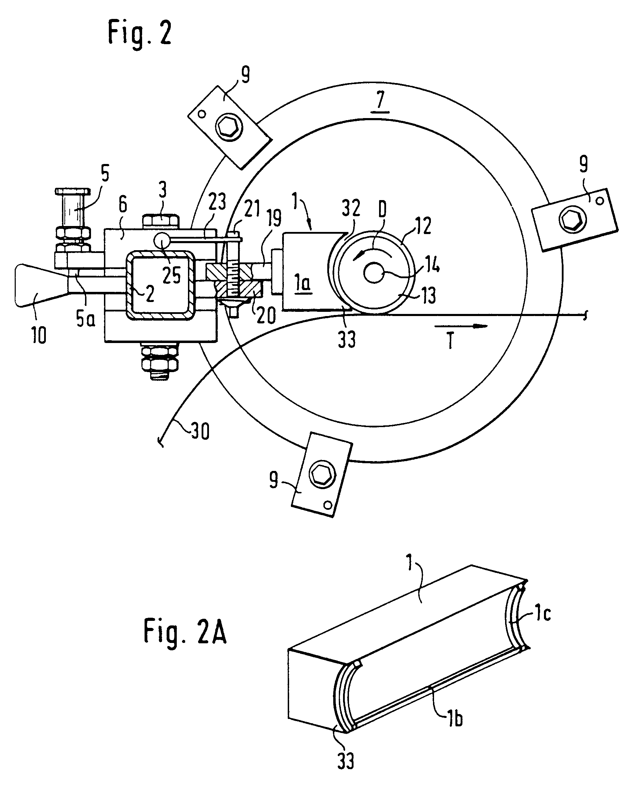

Die in den Fig. 1 und 2 dargestellte Vorrichtung dient der Herstellung von Granulaten bzw. Pastillen. Die Materialstücke, z.B. Tropfen oder Stränge, werden auf ein Transportband (30) aufgebracht, das sich in der gezeigten Pfeilrichtung (T) bewegt. Dicht oberhalb des Bandes und anschließend an einen Umlenkbereich ist zum Ausbringen der viskosen Masse eine Trommel (13) angeordnet, deren Rotationsachse (11) horizontal und quer zur Bandlaufrichtung (T) verläuft. Die Trommel (13) enthält auf einem Abschnitt (B) ihrer Mantelfläche in üblicher Weise hier nicht näher gezeigte Öffnungen, durch die hindurch die Masse ausbringbar ist, von wo sie auf das Transportband abgelegt wird.

Innerhalb der Trommel (12) ist koaxial eine weitere Trommel (13) als zylindrischer Behälter angeordnet, dessen Innerem die Masse zugeführt wird. Die Zuführung erfolgt über Zuleitungen an einem stirnseitigen Ende, die ebenso wie die einseitige Lagerung und der Antrieb der relativ zur feststehenden inneren Trommel (13) drehbaren Trommel (12) in einem Gehäuse (31) untergebracht sind. Wie ebenfalls üblich, weist die innere, feststehende Trommel (13) dem Transportband (30) zugewandte, in einer Reihe angeordnete Öffnungen an ihrem Umfang über eine Länge auf, die der axialen Ausdehnung des mit Öffnungen versehenen Trommelmantelbereichs (B) der äußeren Trommel (12) entspricht. Während die Masse unter Druck dem Innenraum der feststehenden Trommel (13) zugeführt ist, rotiert die äußere Trommel (12) bei Betrieb mit derartigem Drehsinn (D), daß die Umfangsgeschwindigkeit des jeweils gerade dem Transportband (30) zugewandten Trommelumfangsbereiches etwa gleich groß der Bandgeschwindigkeit ist. Die innere Trommel (13) braucht nicht zwingend rotationssymmetrisch zu sein, es ist lediglich darauf zu achten, daß der Innenumfang der rotierenden, äußeren Trommel (12) den Außenumfang der inneren, feststehenden Trommel (13) in dem dem Transportband zugewandten unterseitigen Bereich eng anliegend umgibt. Dies gewährleistet, daß die Masse aus dem Innenraum der feststehenden Trommel durch deren unterseitige Öffnungen und durch die jeweils korrespondierenden, sich spaltfrei anschließenden Öffnungen der rotierenden, äußeren Trommel auf das Band ausgebracht wird, ohne daß sie sich stattdessen zwischen die Behälterwandungen ausbreitet.

Außerhalb des dem Transportband (30) zugeordneten Bereichs ist am Außenumfang der rotierenden Trommel (12) ein Einweiser (1) angeordnet, der einen Teil des Trommelumfangs umgibt und sich axial jeweils geringfügig über den mit Öffnungen versehenen Trommelmantelbereich (B) hinaus erstreckt. Der Einweiser (1) schließt axial jeweils mit Seitenwänden (1a) ab. Er ist auf seiner Innenseite, die der Trommel (12) zugewandt ist, mit Dichtstreifen oder -leisten (1b, 1c) versehen, die am Trommelumfang anliegen (Fig. 2a). Der Dichtstreifen (1b) ist dabei dem in Drehrichtung hinteren Abschnitt (33) des Einweisers zugeordnet. In Umfangsrichtung umgibt der Einweiser (1) den Trommelmantel dergestalt, daß sich ein in Drehrichtung (D) enger werdender Spalt (32) zwischen Einweiserfrontseite und Trommelmantel bildet. Der Einweiser bewirkt, daß eventuell nicht auf das Band (30) abgetropftes, am Außenumfang der rotierenden, äußeren Trommel (12) verbliebenes Material in die Öffnungen am Mantel der rotierenden Trommel zurückgedrückt wird. Nach Verlassen des anliegenden Einweiserabschnitts (33) ist daher der rotierende Trommelaußenumfang vollständig frei von derartigem Restmaterial, so daß durch die entsprechenden Öffnungen ein störungsfreies, erneutes Ausbringen eines Materialtropfens oder -stranges möglich ist.

Um das Zurückdrücken verbliebenen Materials in die Öffnungen der rotierenden äußeren Trommel (12) durch Druckwirkung zu unterstützen, ist der Spaltraum (32) zwischen Einweiser (1) und Trommelumfang möglichst allseitig - durch die Dichtleisten (1b, 1c) - abgeschlossen. In der Betriebsstellung des Einweisers (1) sind diese Dichtleisten schlecht zugänglich. Da die Dichtleisten z.B. aus Kunststoff bestehen und nach einer gewissen Betriebszeit verschleißen, müssen sie ausgewechselt werden. Für derartige Arbeiten kann der Einweiser (1) daher radial vom Trommelmantel weggeschwenkt werden. Hierzu ist er mit einem Haltearm (2) verbunden, der am einen Ende über eine Schwenkachse (3) verschwenkbar an einer Halterung (6) angelenkt ist. In der Betriebsstellung verläuft der als Vierkant gestaltete Haltearm (2) parallel versetzt zur Trommelachse (11), während die Schwenkachse (3) in einer Ebene senkrecht zur Rotationsachse (11) liegt. Von dieser Funktionsstellung, in der der Einweiser (1) am Trommelumfang anliegt, ist der Haltearm (2) um 90° von den Trommeln (12, 13) wegschwenkbar, wobei er in dieser weggeschwenkten Wartungsposition durch Einrasten eines Arretierstifts (5) der Halterung (6) in eine Bohrung (4) am Haltearm (2) selbsttätig arretiert wird. Das Verschwenken des Haltearms (2) samt Einweiser (1) wird durch einen an den Haltearm (2) angeschweißten Schwenkgriff (10) erleichtert, welcher in etwa mittig quer an der dem Einweiser (1) gegenüberliegenden Seite des Haltearms (2) absteht. In der weggeschwenkten Wartungsstellung befindet sich der Haltearm (2) samt Einweiser (1) vollständig außerhalb des Transportbandbereiches, so daß die entsprechenden Teile, z. B. die Dichtleisten (1b, 1c) leicht zugänglich sind. Dabei liegt der Haltearm (2) mit dem Einweiser in einem Bereich, der auf der von dem mit den zu granulierenden Tropfen versehenen Teil des Transportbandes abgewandten Seite des Rotoformers (12, 13) liegt. Das bringt den Vorteil mit sich, daß der Haltearm, auch in der Betriebsstellung nicht von Dämpfen beeinträchtigt werden kann, die von den Tropfen aufsteigen. Die Funktionsfähigkeit des Haltearmes und der Andrückeinrichtung für den Einweiser bleiben aber erhalten.

Nach Anheben des Arretierstifts (5) kann der Haltearm (2) in die Funktionsstellung zurückgeschwenkt werden. Zur exakten Einjustierung ist an dem der Schwenkachse (3) gegenüberliegenden Ende des Haltearms (2) über einen Flansch (18) eine Spornhalterung (17) befestigt, welche einen in seiner Längsrichtung verstellbaren Sporn (15) trägt. Die Axialverschiebung des Sporns (15) erfolgt über eine Rändelschraube (16). Mit dem Sporn (15) wirkt eine passende, kegelförmige Einbuchtung (14) zusammen, die mittig an der zugewandten Stirnseite der feststehenden Trommel (13) angebracht ist. Die Einbuchtung (14) befindet sich an der dem Gehäuse (31) für die Halterung der feststehenden (13) bzw. der Lagerung der drehbaren Trommel (12) gegenüberliegenden Stirnseite der feststehenden Trommel (13). Nach Verschwenken des Haltearms (2) in seine parallel zu den Trommeln (12, 13) verlaufende Funktionsstellung wird der Sporn (15) durch Drehen der Schraube (16) in die Einbuchtung (14) eingeführt und dadurch der Haltearm (2) exakt gegenüber den Trommeln (12, 13) fixiert. Vor dem Wegschwenken des Haltearms (2) ist dementsprechend zunächst wieder der Sporn (15) aus der Einbuchtung (14) herauszuführen.

Die Schwenkhalterung (6), die sich auf derselben Seite des Transportbandes (30) wie das Halte- und Lagergehäuse (31) für die Trommeln (12, 13) befindet, ist ihrerseits an einem scheibenförmigen Ring (7) befestigt, welcher das Gehäuse (31) umgibt und um die Trommelachse (11) verdrehbar ist. Der Ring (7) ist in einer Ausnehmung eines weiteren Gehäuseteils (8) geführt, wobei er gegenüber letzterer mit drei gleichmäßig am Umfang verteilten Spannelementen (9) festlegbar ist. Nach Lösen der Spannelemente (9) läßt sich der Ring (7) und damit auch die Halterung (6), der Haltearm (2) und der Einweiser (1) um die Trommelachse (11) verdrehen und in einer anderen Position erneut festlegen. Damit ist es möglich, den Einweiser (1) je nach Erfordernis in unterschiedlichen Umfangsbereichen der Trommel (12) anzuordnen. Beispielsweise kann er dem Transportband (30) genau gegenüberliegend, also oberhalb der Trommel (12) angeordnet sein. Zur Wartung ist es dann vorteilhaft, zunächst den Ring (7) zu lösen und den Haltearm (2) in die in den Fig. 1 und 2 gezeigte Position seitlich der Trommeln (12, 13) zu verdrehen und daraufhin - nach Herausführen des Sporns (15) - den Haltearm (2) samt Einweiser (1) zur Seite hin wegzuschwenken. Da die Trommeln (12, 13) zu Beginn eines Umlenkbereichs des Bandes (30) angeordnet sind, befinden sich der Haltearm (2) und der Einweiser (1) in der weggeschwenkten Wartungsposition auch stirnseitig außerhalb des Transportbandbereiches, so daß sie von allen Seiten problemlos zugänglich sind.

Der Einweiser (1) ist über eine Exzenterlagerung in gewissem Umfang quer zum Haltearm (2) beweglich an diesem angelenkt. Hierzu ist eine erste Lasche (20) seitlich am Haltearm (2) angeschweißt und eine diese teilweise überdeckende zweite Lasche (19) am Einweiser (1) angeschraubt. In beiden Laschen (19, 20) befindet sich eine Öffnung (22). Durch diese übereinanderliegenden Öffnungen ist ein Exzenterbolzen (21) durchgesteckt. Ein Verdrehen des Exzenterbolzens (21) führt deshalb dazu, daß sich die zweite Lasche (19) und damit der mit ihr verbundene Einweiser (1) quer zur ortsfest verbleibenden zweiten Lasche (20) und dem mit dieser verbundenen Haltearm (2) bewegt. Die Drehung des Exzenterbolzens (21) wird über einen Hebelarm (23) und eine mit dessen anderem Ende über ein Gelenk verbundene Schubstange (24) bewirkt.

Die Schubstange (24) ist an einer Seite des Haltearms (2) längsverlaufend gehalten, indem sie durch einen Durchlaß einer seitlich am Haltearm (2) angeschweißten Lasche (26) durchgeführt ist. Zwischen der Lasche (26) des Haltearms (2) und einen Anschlag (29) an der Schubstange (24) ist eine Druckfeder (28) eingebracht, welche die Schubstange (24) in die in Fig. 1 nach links zeigende Richtung drückt, wodurch wiederum der Einweiser (1) vom Haltearm (2) weg in Richtung auf den Trommelmantel gedrückt wird. Der am Trommelumfang anliegende Einweiserabschnitt (33), bzw. die Leisten (1b, 1c) werden dadurch federelastisch gegen die rotierende Mantelfläche der äußeren Trommel (12) angedrückt. Der Einweiser (1) justiert sich mit dieser Maßnahme selbsttätig nach, wenn die Höhe der die Trommel berührenden Dichtleisten (1b, 1c) verschleißbedingt nach einiger Betriebsdauer abnimmt.

Die von der Druckfeder (28) verursachte Stangenbewegung ist von einem der Druckfeder (28) auf der anderen Seite des Flansches (26) gegenüberliegenden Anschlag (27) an der Stange (24) begrenzt. Diese Begrenzung tritt zum einen ein, wenn der Haltearm (2) in die Wartungsposition verschwenkt wird, weil dann der Einweiser (1) nicht mehr an der Trommel (12) anliegt. Stößt der Anschlag (27) hingegen auch in der in den Fig. 1 und 2 gezeigten Betriebsstellung des Haltearms (2) bzw. des Einweisers (1) an den Flansch (26) des Haltearms (2) an, so signalisiert dies, daß die dem Verschleiß unterworfenen Dichtleisten (1b, 1c) des Einweisers (1) abgeschliffen sind und ausgetauscht werden müssen.

Durch Ziehen am stirnseitigen Kopf (25) der Stange (24) in der gezeigten Pfeilrichtung (Z) kann schließlich eine Bedienperson bei Bedarf den Einweiser (1) geringfügig radial vom Mantel der Trommel (12) in der gezeigten Pfeilrichtung wegziehen, ohne den Haltearm (2) verschwenken zu müssen. Im Fall, daß der Einweiser (1) einem anderen Umfangsbereich der Trommel (12) durch Drehen des Rings (7) zugeordnet werden soll, kann es statt einer gesamten Verschwenkung des Haltearms (2) ausreichend sein, den Einweiser (1) durch Ziehen der Stange (24) vom Trommelmantel abzuheben, bevor der Ring (7) verdreht wird.

## Patentansprüche

1. Vorrichtung zum streifen- oder tropfenförmigen Ausbringen fließfähiger Massen auf ein unterhalb vorbeigeführtes Transportband (30), mit
- zwei relativ zueinander drehbaren Zylinderbehältern (12, 13), die konzentrisch ineinander gelagert sind, wobei eine drehbare, äußere Trommel (12) vorgesehen ist, deren Mantelfläche mit Öffnungen versehen ist, die durch Rotation der Trommel zyklisch mit mindestens einer Öffnung des anderen Behälters (13) zur Deckung kommen, und
- einem die äußere Trommel in einem vom Transportband (30) abgewandten Umfangsbereich umgebenden Einweiser (1),
dadurch gekennzeichnet, daß
- der Einweiser (1) um eine in einer Schwenkhalterung (6) angeordnete Achse (3) radial vom Mantel der Trommel (12) weg verschwenkbar angeordnet ist.

2. Vorrichtung nach Anspruch 1, dadurch gekennzeichnet, daß der Einweiser (1) mit einem Haltearm (2) verbunden ist, wobei der Haltearm an seinem einen Ende in der Halterung (6) schwenkbeweglich gelagert ist.

3. Vorrichtung nach Anspruch 1 oder 2, dadurch gekennzeichnet, daß sich die Schwenkachse (3) seitlich des Transportbandbereiches befindet und senkrecht zur Trommelachse (11) verläuft.

4. Vorrichtung nach Anspruch 2 oder 3, dadurch gekennzeichnet, daß der Haltearm (2) zwischen einer zur Trommelachse (11) etwa parallelen Lage, in welcher der Einweiser (1) am Trommelmantel anliegt, und einer zu dieser etwa senkrechten Lage verschwenkbar ist.

5. Vorrichtung nach Anspruch 4, dadurch gekennzeichnet, daß der Haltearm (2) in der senkrecht zur Trommelachse (11) verschwenkten Position arretierbar (4, 5) ist.

6. Vorrichtung nach Anspruch 5, dadurch gekennzeichnet, daß beim Verschwenken des Haltearms (2) in die Position senkrecht zur Trommelachse (11) ein Arretierstift (5) an der Halterung (6) selbsttätig in eine korrespondierende Bohrung (4) des Haltearms (2) einrastet.

7. Vorrichtung nach einem der Ansprüche 2 bis 6, gekennzeichnet durch einen um die Trommelachse (11) verdrehbaren und an einem feststehenden Gehäuseteil (8) festlegbaren Ring (7), an dem die Schwenkhalterung (6) starr befestigt ist.

8. Vorrichtung nach einem der Ansprüche 2 bis 7, gekennzeichnet durch eine Spornhalterung (17) an dem der Schwenkhalterung (6) gegenüberliegenden Ende des Haltearms (2), welche einen Sporn (15) axial verstellbar hält, der in Betriebsstellung des Haltearms (2) mit einer kegelförmigen Einbuchtung (14) am zugewandten Stirnende des feststehenden Trommelbehälters (13) zusammenwirkt.

9. Vorrichtung nach einem der Ansprüche 2 bis 8, dadurch gekennzeichnet, daß der Einweiser (1) über einen drehbaren Exzenterbolzen (21) quer zum Haltearm (2) beweglich an diesem angelenkt ist.

10. Vorrichtung nach Anspruch 9, dadurch gekennzeichnet, daß ein drehfest mit dem Exzenterbolzen (21) verbundener Hebelarm (23) über ein Gelenk mit einer längs des Haltearms (2) verschiebbar an diesem angeordneten Stange (24) verbunden ist.

11. Vorrichtung nach Anspruch 10, gekennzeichnet durch eine den Einweiser (1) quer vom Haltearm (2) wegdrückende Feder (28) zwischen einem ersten Anschlag (29) der Stange (24) und einem Flansch (26) des Haltearms (2).

12. Vorrichtung nach Anspruch 11, gekennzeichnet durch einen zweiten, mit der der Druckfeder (28) gegenüberliegenden Seite des Flansches (26) zusammenwirkenden Anschlag (27) der Stange (24) zur Bewegungsbegrenzung der von der Druckfeder verursachten Stangenverschiebung.

13. Vorrichtung nach einem der Ansprüche 2 bis 12, gekennzeichnet durch einen etwa mittig am Haltearm (2) auf der dem Einweiser (1) gegenüberliegenden Seite angebrachten Schwenkgriff (10).

14. Vorrichtung nach Anspruch 1, dadurch gekennzeichnet, daß die Schwenkhalterung (6) auf der in der Laufrichtung des Transportbandes (30) vor den Zylinderbehältern (12, 13) liegenden Seite angeordnet ist.

## Claims

1. A device for dispensing free-flowing masses as strips or drops onto a conveyor belt (30) passing underneath, with
- two cylindrical containers (12, 13) which rotate in relation to each other and are positioned concentrically one inside the other, with one rotatable, outer drum (12), the surface of the shell of which contains openings which are moved cyclically by the rotation of the drum to cover at least one of the openings in the other container (13), and
- a guide (1) which encompasses the section of the outer surface of the outer drum facing away from the conveyor belt (30),
characterised in that
- the guide (1) is positioned in such a way that it can be pivoted radially away from the shell of the drum (12) about a pin (3) in a pivoting holding device.

2. A device in accordance with Claim 1, characterised in that the guide (1) is connected to a supporting arm (2) with one end of the supporting arm being fixed to the holding device (6) in such a way that it can pivot.

3. A device in accordance with Claim 1 or 2, characterised in that the pivoting axis (3) is located to the side of the conveyor belt area and runs vertical to the drum axis (11).

4. A device in accordance with Claim 2 or 3, characterised in that the supporting arm (2) can pivot between a position approximately parallel to the drum axis (11), in which the guide (1) rests on the drum shell, and a position approximately vertical to this.

5. A device in accordance with claim 4, characterised in that the supporting arm (2) can be locked (4, 5) in the pivoted position vertical to the drum axis (11).

6. A device in accordance with Claim 5, characterised in that when the supporting arm (2) is pivoted into the position vertical to the drum axis (11), a locking pin (5) on the holding device (6) engages automatically in a corresponding hole (4) in the supporting arm (2).

7. A device in accordance with Claims 2 to 6, characterised by a ring (7) which can rotate about the drum axis (11) and be secured to a fixed part of the housing (8), to which the pivoting holding device (6) is rigidly fixed.

8. A device in accordance with claims 2 to 7, characterised by a pin holder (17) on the end of the supporting arm (2) opposite the pivoting holding device (6) holding an axially adjustable pin (15) which cooperates with a conical indentation (14) on the facing end of the fixed drum container (13) when the supporting arm (2) is in the operating position.

9. A device in accordance with claims 2 to 8, characterised in that the guide (1) is connected to the supporting arm (2) via a rotatable eccentric bolt (21) in such a way that it can move transversely in relation to the arm.

10. A device in accordance with Claim 9, characterised in that a lever arm (23) connected to the eccentric bolt (21) in such a way that it cannot rotate, is connected via a joint to a rod (24) positioned on the supporting arm (2) so that it can move along the arm.

11. A device in accordance with Claim 10, characterised by a spring (28) which pushes the guide (1) away from the supporting arm (2) transversely between a first limit stop (29) on the rod (24) and a flange (26) on the supporting arm (2).

12. A device in accordance with claim 11, characterised by a second limit stop (27) on the rod (24) which cooperates with the side of the flange (26) opposite the pressure spring (28) to restrict the movement of the rod caused by the pressure spring.

13. A device in accordance with one of claims 2 to 12, characterised by a pivoting handle (10) fitted approximately at the centre of the supporting arm (2) on the side opposite the guide (1).

14. A device in accordance with Claim 1, characterised in that the pivoting holding device (6) is located before the cylindrical containers (12, 13) in relation to the direction of movement of the conveyor belt (30).

## Revendications

1. Dispositif pour déposer sous la forme de bandes ou de gouttes, des masses fluides sur une bande convoyeuse (30) circulant au-dessous de ce dispositif, comportant
- deux récipients cylindriques (12,13) pouvant tourner l'un par rapport à l'autre et qui sont montés concentriquement l'un dans l'autre, tandis qu'il est prévu un tambour extérieur rotatif (12), dont la surface enveloppe comporte des ouvertures, qui, sous l'effet de la rotation du tambour, viennent typiquement en recouvrement avec au moins une ouverture de l'autre récipient (13), et
- un dispositif d'application (1) qui entoure le tambour extérieur dans une zone circonférentielle tournée à l'opposé de la bande convoyeuse (30),
caractérisé en ce que
- le dispositif d'application (1) est disposé de manière à pouvoir pivoter radialement de manière à s'écarter de l'enveloppe du tambour (12), autour d'un axe (3) disposé dans un support à pivotement (6).

2. Dispositif selon la revendication 1, caractérisé en ce que le dispositif d'application (1) est relié à un bras de retenue (2), dont une extrémité est montée, de manière à pouvoir pivoter, dans le support (6).

3. Dispositif selon la revendication 1 ou 2, caractérisé en ce que l'axe de pivotement (3) est disposé latéralement par rapport à la zone de la bande convoyeuse et s'étend perpendiculairement à l'axe (11) du tambour.

4. Dispositif selon la revendication 2 ou 3, caractérisé en ce que le bras de fixation (2) peut basculer entre une position approximativement parallèle à l'axe (11) du tambour et dans laquelle le dispositif d'application (1) s'applique contre l'enveloppe du tambour, et une position approximativement perpendiculaire à l'axe du tambour.

5. Dispositif selon la revendication 4, caractérisé en ce que le bras de fixation (2) peut être bloqué (4,6) dans la position basculée perpendiculaire à l'axe (11) du tambour.

6. Dispositif selon la revendication 5, caractérisé en ce que lors du pivotement du bras de fixation (2) venant dans la position perpendiculaire à l'axe (11) du tambour, une broche de fixation (5) située sur le support (6) s'encliquette automatiquement dans un perçage correspondant (4) du bras de fixation (2).

7. Dispositif selon l'une des revendications 2 à 6, caractérisé par un anneau (7) pouvant tourner autour de l'axe (11) du tambour et pouvant être fixé à un élément de boîtier fixe (8) et sur lequel est fixé rigidement le support à pivotement (6).

8. Dispositif selon l'une des revendications 2 à 7, caractérisé par un dispositif de fixation à pointe (17), disposé sur l'extrémité du bras de fixation (2), située à l'opposé du support pivotant (6) et qui retient, de manière qu'elle puisse se déplacer axialement, une pointe (15), qui, lorsque le bras de fixation (2) est dans la position de fonctionnement, coopère avec un renfoncement conique (14) ménagé dans la face frontale, tournée de ce côté, du récipient en forme de tambour fixe (13).

9. Dispositif selon l'une des revendications 2 à 8, caractérisé en ce que le dispositif d'application (2) est articulé sur le bras de fixation (2) de manière à être déplaçable transversalement par rapport à ce dernier, par l'intermédiaire d'un boulon excentrique pivotant (21).

10. Dispositif selon la revendication 9, caractérisé en ce qu'un bras de levier (23) relié d'une manière bloquée en rotation au boulon excentrique (21) est raccordé par l'intermédiaire d'une articulation à une barre (24) montée le long du bras de fixation (2) de manière à être déplaçable sur ce dernier.

11. Dispositif selon la revendication 10, caractérisé par un ressort (28), qui écarte le dispositif d'application (1) transversalement par rapport au bras de fixation (2) et est disposé entre une première butée (22) de la barre (24) et une bride (26) du bras de fixation (2).

12. Dispositif selon la revendication 11, caractérisé par une seconde butée (27) de la barre (24), qui coopère avec le côté de la bride (26), situé à l'opposé du ressort de pression (28), et qui sert à limiter le déplacement de la barre, provoqué par le ressort de pression.

13. Dispositif selon l'une des revendications 2 à 12, caractérisé par une poignée (10) montée d'une manière approximativement centrée sur le bras de fixation (2) sur le côté situé à l'opposé du dispositif d'application (1).

14. Dispositif selon la revendication 1, caractérisé en ce que le support basculant (6) est disposé sur le côté situé, dans la direction de transport de la bande convoyeuse (30), en amont des récipients cylindriques (12,13).
